# EUROPEAN PATENT SPECIFICATION

(11) **EP 1 949 031 B1**
(45) Date of publication and mention of the grant of the patent: **21.04.2010**
(21) Application number: 06808599.2
(22) Date of filing: 20.11.2006
(51) Int. Cl.: G01C 21/26, G08G 1/0969

(54) **A NAVIGATION DEVICE DISPLAYING TRAFFIC INFORMATION**
VERKEHRSINFORMATIONEN ANZEIGENDE NAVIGATIONSEINRICHTUNG
DISPOSITIF DE NAVIGATION AFFICHANT DES INFORMATIONS CONCERNANT LA CIRCULATION

(30) Priority: 18.11.2005 GB 0523512
(43) Date of publication of application: 30.07.2008
(73) Proprietor: TomTom International B.V., 1017 CT Amsterdam (NL)
(72) Inventor: ADAM, Thomas, Bruce, Watson, Edinburgh EH13 0JH (GB); ATKINSON, Ian, Malcolm, Edinburgh EH25 9LH (GB); DIXON, Michael, Joseph, EH4 1NE (GB)
(86) International application number: PCT/GB2006/004314
(87) International publication number: WO 2007/057696

(56) References cited:
- EP-A2- 0 987 910
- EP-A2- 1 357 529
- WO-A2-2004/003788
- US-A- 5 982 298
- US-A1- 2003 210 806
- US-A1- 2005 128 102

## Description

### BACKGROUND OF THE INVENTION

### 1. Field of the Invention

This invention relates to a navigation device that displays traffic information.

### 2. Description of the Prior Art

Advances in technology and the increasing pressures of congested road environments have encouraged the development and adoption of Personal Navigation Devices (PND). The abbreviation PND is sometimes used to refer to a 'portable navigation device', but in this specification will be given its more expansive definition, covering any kind of personal navigation device that is either portable (e.g. can be fixed to an auto windscreen using a suction mount), or embedded (e.g. permanently fixed into an automobile). PNDs can be dedicated navigation devices (e.g. a device whose primary function is navigation) or can have multiple other applications (e.g. media players) or can have a primary function other than navigation (e.g. they may be a mobile telephone). PNDs are used predominantly, but not exclusively, in cars and other motor vehicles. PNDs incorporate geographical map databases including road information and points of interest. They generally include software which allows the user to input a destination and to be provided with one or more routes; driving instructions are issued to guide the driver along the selected route to the destination. The PND may include a mount attachable to an automotive windscreen.

The selection of the route along which to guide the driver can be very sophisticated, and the selected route may take into account existing and predicted traffic and road conditions, historical information about road speeds, and the driver's own preferences for the factors determining road choice. In addition, the device may continually monitor road and traffic conditions, and offer to or choose to change the route over which the remainder of the journey is to be made due to changed conditions.

Road travel is a major part of everyday life for businesses, for other organizations, and for private individuals. The costs of traffic delays can be very large. The purely financial cost has been estimated as billions of pounds in the UK alone. Given these costs, systems which can assist drivers to optimize their travel, for instance by selecting the best route and by avoiding congestion delays, are of significant value. In fact a diverse array of driver information systems has grown up. The longest established are broadcast radio traffic reports which aggregate data from a number of sources such as the police, eye-in-the-sky, and more recently mobile phone calls from drivers stuck in traffic jams, to provide subjective advice about incidents and delays. Radio Data System (RDS) radios make these systems more effective by automatically cutting to traffic reports from normal radio programmes. Static route planning systems are provided on the websites of major motoring organisations such as the Automobile Association (AA) and RAC plc in the UK. These allow a driver to enter the points of a journey and to be given a route and driving instructions for that route.

In the recent past, global positioning system (GPS)-based in-vehicle personal navigation devices have been introduced. Examples of these are the TomTom GO™ series of PNDs. Personal navigation devices use the GPS system to discover the exact position of the vehicle on the road network and to plot the location of the vehicle on an on-screen road map. PNDs contain a mechanism for computing best or good routes between two or more points on the road network and can direct the driver along the chosen route, continually monitoring their position on that route. Personal navigation devices have begun to incorporate traffic information into their services, and in some, traffic information is integrated into the route selection process: the PND will route around congested roads. Where traffic information is provided by the PND, the user can observe delays where they impact the selected route, and guide the device to re-plan a route avoiding the delayed sections of road if they consider this necessary. Real time traffic monitoring systems, based on various technologies (e.g. mobile phone calls, fixed cameras, GPS fleet tracking) are being used to identify traffic delays and to feed the information into notification systems.

Government organizations charged with managing the transport network have installed static traffic cameras at key locations on the road network. The images from these cameras are presented on public websites in order to give drivers immediate visual information about the state of the roads.

Each of the above systems has unique strengths and weaknesses. While a personal navigation device can provide what is in a formal sense optimal advice for the route to take on a particular journey, this advice may be disregarded by the driver if the route proposed seems unusual, or if there is no supporting evidence for the route selection. Clearly, an unusual route selection may be made when the normal best route suffers severe congestion or an accident.

It is known that static traffic cameras can provide very direct information. A user can see queues of vehicles on a congested section of road, or moving slowly through a section of roadworks. Weather conditions in the area monitored by the camera provide extra information about likely traffic conditions: snow, heavy rain or bad visibility may provide the driver with a reason to postpone their journey. On the negative side, traffic cameras cannot easily be consulted during a journey: the driver must plan ahead and check them before setting off, typically from an internet connected PC.

Broadcast radio reports can be very reassuring, and tend to be trusted. They are also very easily available. But a driver who wishes to depart may have to wait up to 25 minutes or more after their desired departure time for the next traffic report which contains information relevant to their trip.

The integration of some of these traffic information systems into PNDs can provide benefits. A driver who checks their regular route when setting off, or after setting off, and sees congestion, may ask their PND for a route which avoids the congestion.

PNDs may consist of a small box with a screen; PNDs may be installed or carried in a vehicle. PNDs typically contain a GPS receive in order to accurately locate the vehicle in which it is installed and determine the vehicle's orientation. The user interacts with the PND to tell it the journey they wish to make. The device selects a route for the journey. The user may intervene in, or guide the route selection process. The device provides visual and audible instructions to show the user the vehicle's current position and to guide the user along a chosen route. User interaction with the device may be by a touch screen, by steering column mounted remote control, by voice activation or by any other suitable method.

PNDs may contain a communications module which allows them to connect to the internet. A PND may communicate using the Bluetooth short-range radio communication system to a General Packet Radio Service (GPRS)-enabled mobile telephone, and from the mobile phone to the internet. An internet connection allows a PND to receive or transmit any information as long as the volume is not too large and a protocol can be agreed for the communication. A PND may download road delay information to display or integrate into route selection or it may download weather information relevant to the route.

A PND is generally implemented as a small programmable computer, consisting of: a central processor unit (CPU); memory for storing and running programs and data; persistent memory for retaining programs and data permanently; a display, and a set of input and output systems. A modern embedded CPU is significantly more powerful than the CPU of a general purpose computer from 5 or 10 years ago, and can easily support running a general purpose operating system such as some variant of Unix. Such systems frequently run an implementation of the free Linux or Berkeley Software Distribution (BSD) operating systems. Persistent memory may be implemented as a hard disk or as some form of non-volatile RAM. In the case of a PND the display may be the touch screen unit. PND input and output systems may include a touch screen, voice activation, or remote control over Bluetooth.

Providers of PNDs and other embedded computing platforms provide development kits to assist computer programmers in creating novel or extended applications for their platforms using standard software development procedures. This serves to encourage improvements to the core application, and promotes an ecosystem of software applications and extensions for the platform which may contribute to its market success.

### SUMMARY OF THE INVENTION

A first aspect of the invention is a navigation device operable to display on a screen a route superimposed on a road map, together with one or more symbols each indicating a location for which audio or visual traffic information exists, each symbol being selectable to play back the audio or visual information, **characterized in that** when the audio or visual traffic information for a location is played back on the device, the device shows a menu option that enables the user to exclude that location from a route.

Non-limiting, optional details are as follows: The visual traffic information might be still or video images, for example generated by one or more fixed traffic cameras, or even cameras (e.g. in a PND itself) operated by end-users sharing that information over a network. The visual traffic information might be generated by or obtained from a web site or from a television service. Audio traffic information might be generated by or obtained from a radio broadcast service or a television audio feed, or generated by or obtained from a web site. The traffic information could also be broadcast or otherwise distributed with location identifying data. The term 'play back' implies that the information is stored; in this specification, it also includes information being played in real-time - for example a real time video feed from a traffic camera without prior local or remote storage (other than the transient storage that is part of the normal broadcast process).

One implementation of the device includes a touch screen display and the symbols are then each large enough to be reliably selected using a fingertip (e.g. the symbols could be each at least 0.3cm x 0.3cm). The device may also include (or be connected to) a voice recognition engine, enabling a user to simply speak an appropriate control message to initiate playback of the audio or visual information (e.g. "Show traffic camera No. 3'). In any event, the symbol may consist solely of text description, or be a graphic or icon that may conform to the appearance of POI (point of interest) symbols: for visual traffic information, the symbol may graphically represents a camera and for audio traffic information it may graphically represent a microphone. It may be a thumbnail image - e.g. an actual thumbnail image of a video frame from a traffic camera.

In a touch screen implementation, when the user touches the screen in the vicinity of a symbol for visual traffic information, the latest image or sequence of images for the location associated with that symbol is displayed for a defined number of seconds.. Similarly, when the user touches the screen in the vicinity of a symbol for audio traffic information, the latest audio report for the location associated with that symbol is played back. Also, when the user touches the screen in the vicinity of a symbol for visual traffic information, the latest image for the location associated with that symbol may be displayed until the user manually chooses to return to the map by touching the screen or using some other control. Likewise, when the user touches the screen in the vicinity of a symbol for audio traffic information, the latest audio report for the location associated with that symbol is played back until the user manually chooses to return to the map by touching the screen or using some other control.

Other implementation specific, optional features are:
- when audio or visual traffic information for a location is played back on the device, the device shows a menu option that enables the user to include or exclude that location from a route. Each traffic camera image (or, more generally, each playback of audio or video traffic information), can be accompanied with route calculation options, such as a button labelled 'include in route' and another button labelled 'exclude from route'. Touching the 'include in route' button then causes the route calculation algorithm (typically running on the PND itself) to calculate a route that goes past the traffic camera (or location otherwise referenced in the traffic information); touching the other button leads to a route being calculated that avoids that particular camera.
- the device can be configured to display a sequence of the images along the route from a set of cameras along the route, when requested by a user command. The images may be displayed in the same order as the cameras along the route: each is displayed for a short time or until the user manually selects to display the next image, from the next camera, or to cancel the sequence. The sequence of images from successive cameras may also be interleaved with the map display highlighting the symbol pertaining to the camera which produced the image it is about to display. The sequence can include forward and back controls to allow the user to flexibly move to the images which are most interesting to them.
- the device may take advantage of the order of images required for a slide show to download the images from the network in expected display order, minimizing the delay to the user before all but the first image is displayed on screen. The expected first image of a slide show may be downloaded immediately (and also automatically - i.e. without any specific user request) a route has been selected, so that there is no delay at all before the slide show begins, when it is requested.
- audio or visual traffic information can be for locations on a planned route; e.g. the cameras are those cameras associated with the planned route or alternatives to that route.
- audio or visual traffic information can be used before or independently of selecting a route.
- the user may choose to view camera image displays within an area that is of interest, either before selecting or requesting a route, or entirely independently of selecting a route.
- the device can be requested to show a slide show of all the visual traffic information from a set of cameras in an area.
- the order of display of the camera images is selected by the device; the device selects the order of display of the camera images by scanning the area and displaying the camera images in the same sequence order as the sequence of camera distances from the user's current location; the camera image from the camera nearest to the user's current location is displayed first, and the camera image from the camera furthest from the user's current location is displayed last.
- the slide show is automatic in that each camera image is shown for a few seconds before proceeding to the next image; or the slide show is non-automatic in that the user must touch the screen, or issue some other command, to request the system to display the next image.
- the device can support the download and display of video clips from the internet.
- a video clip of traffic moving through the camera area is shown when the camera is selected via a camera symbol on a map.
- a series of video clips are shown, one clip per camera, when a slide show of the cameras on a route or in an area is requested.
- the traffic information which is displayed is displayed together with a symbol which indicates the traffic direction corresponding to the direction in which the user wishes to travel. This applies to both visual as well as audio traffic information.
- the symbol which is displayed to represent the presence of visual traffic information at a location is displayed together with further symbols which indicate for which viewing directions visual traffic information is available for that location.
- Another approach is for an arrow to be superimposed over the actual lanes that form part of the route; this may require pattern recognition software able to determine the edges of the road and to morph or alter the shape of an arrow so that it is shown in the correct orientation and perspective as though forming part of the road surface.

A second aspect of the invention is a system including a navigation device as described above and a proxy server operable to supply audio or visual traffic information to said device, said server adapting the audio or visual information for the specific playback requirements of the navigation device.

The proxy server is supplied with (or requests) data from audio or visual traffic information sources; it can act as middleware, in effect taking in data feeds for audio and visual traffic information and adapting that information to conform to a standard, or extracting data from that incoming information and re-packaging that data in a standard format suitable to bandwidth efficient broadcast or transmission to PNDs.

Other optional features of the proxy server include the following:
- the proxy server converts the images to a format which can be read by PNDs.
- the proxy server scales or clips the image to the PND form factor.
- the proxy server compresses the image to the minimum detail level visible on the PND screen.
- the proxy server reduces the frame rate of the video to a minimum consistent with keeping the video viewable on the device; the frame rate may be as low as 5 frames per second.
- the proxy server encodes the resultant video using an A/V encoding standard such as MPEG-4 in order to yield highly compressed video data.
- the proxy server can select traffic reports from the internet, or from broadcasts.
- the proxy server can store the traffic reports as audio streams indexed by the station coverage area.
- when a user of the device makes a request, the latest reports from stations which intersect the geographical area of interest to the driver, or from stations in the geographical area through which the driver is being routed by the device, can be transmitted to the device and played back by it.

A final aspect of the invention is a method of providing audio or visual traffic information to a navigation device, the navigation device being operable to display on a screen a route superimposed on a road map, together with one or more symbols each indicating a location for which audio or visual traffic information exists, each symbol being selectable to play back the audio or visual information, **characterized in that**, if the audio or visual traffic information for a location is played back on the device, the device shows a menu option that enables a user to include or exclude that location from a route, said method comprising the steps of: (a) a proxy server obtaining or being provided with audio or visual traffic information from one or more sources of that information; and (b) the proxy server manipulating the information for reproduction on the device.

### BRIEF DESCRIPTION OF THE DRAWINGS

**Figure 1** is a PND screen view, presenting a map which shows the current location, the destination, and the approximate positions of two traffic cameras with respect to the road network.
**Figure 2** is a PND screen view of traffic camera image data obtained from camera 1 in Figure 1.
**Figure 3** is a PND screen view of traffic camera image data obtained from camera 2 in Figure 1.
**Figure 4** is an image of a PND device which is an example of the invention and which is carrying out an example of the invention.

### DETAILED DESCRIPTION

With a complex PND system, it is beneficial to give the user clear and simple information which validates the advice given by the personal navigation device. A mechanism is described which enhances PNDs with still images, video and audio relevant to traffic conditions in the vicinity of a driver and on the route of any journey they propose to make in order that the driver can be presented with and review audio and/or visual (A/V) information relating to their journey. The mechanism described here allows the validation of route selection using still images, video and audio. This provides a much improved interaction experience for the user of a PND and improves the driver's confidence in the advice offered by the device. The driver will be reassured when it is clear that the advice is accurate. Equally, the mechanism allows a driver to review A/V information relating to possible routes, or independently of any route; he may for example simply be curious to see traffic conditions on a given road.

In an implementation of the present invention, a PND can be enhanced to request or be sent A/V data such as images, video or sound, from a communication network, for example from an internet location or directly from the GPRS network provider's systems. Or the PND can be registered with a network service which pushes A/V data to it. The PND can then present images and video on screen and audio over loudspeakers when requested by the control system of the PND. Where such A/V data consists of traffic camera images, the PND can provide an interface to allow the search, selection and display of images from traffic cameras on or near to a route, or in a specified geographical area. The traffic cameras used in this invention may be those cameras associated with a planned route or with alternatives to that route. Image data may also be that recorded using a camera on a mobile phone; such data may be collected by a PND, then transmitted to a network for use as camera information which relates to traffic. Image data may be that recorded by a television service. Where the A/V data is audio, the PND can provide mechanisms to allow the selection and playback of audio streams. This may consist of recent traffic reports from local radio stations located in the geographical areas of interest, or audio obtained from a television service, of any other useful audio information uploaded to the PND, or of audio synthesised from other information, such as from web page information, in order to present it most conveniently to the user of the PND. Any piece of A/V data may be supplied together with location identifiers, such as spatial coordinates such as latitude and longitude, which identify the place to which the information relates. For camera data, this may be provided with direction indicating data such as the direction in which the camera is pointing, such as may be represented by a compass bearing for example.

### Traffic Camera Image Presentation

Traffic camera images can be selected for download from the internet, and display on the PND screen, in a number of ways. For example, for the display of Camera Images relevant to a chosen route, when a route has been selected the device will display the route superimposed on a road map, with symbols indicating the location of traffic cameras additionally superimposed. The symbols will be large enough to be reliably selected using a fingertip: such symbols will be at least 0.3 cm by 0.3 cm in area. The symbol relating to visual traffic data may resemble a camera. The symbol relating to audio traffic data may resemble a speaker or a microphone. An arrow or other direction indicating symbol near to each traffic camera symbol may be included; this points in the approximate direction in which the traffic camera is pointing, to help the user to understand on which part of the camera image to look for the traffic which is travelling in the same direction as the user's possible route. Alternatively, the traffic camera symbol may be oriented so that the direction in which the traffic camera symbol is pointing is approximately the same as the direction in which the traffic camera is pointing. The PND can be configured so that when the user touches the screen in the vicinity of a camera symbol, the latest image from the indicated camera is displayed for a defined number of seconds. The display then returns to the map. The device can alternatively be configured so that when the user touches the screen in the vicinity of a camera symbol, the latest image from the indicated camera is displayed until the user manually chooses to return to the map by touching the screen or using some other control.

Where traffic camera images for opposite directions from approximately the same place on a route are available, the default may be for the PND to display the camera image from the camera which is pointing in approximately the same direction as the direction along the route in which the user wishes to travel. However, this may not always be available, as one of the two cameras may not be working, or traffic camera cost installation reasons may mean that only one traffic camera is present at a particular location, for example. It may be preferable to include an arrow in the map image only for the exceptional cases in which the camera is pointing along the direction which is opposite to the route direction in which the user wishes to travel. If a user wishes to check the available camera image data very thoroughly, the user may wish to review the camera images for both possible directions from a particular direction. In this case, two arrows each pointing in opposite directions will be shown on the map image. By selecting each arrow in turn for example, the user can thereby view the camera image for each respective camera pointing direction. Within a camera image, optionally a symbol or word can be displayed which indicates whether the direction shown is approximately parallel to or approximately opposite to the direction in which the user wishes to travel. For example, an up arrow may be used to show a parallel direction; a down arrow may be used to show an opposite direction.

The PND must perform a calculation so as know if a given camera image is approximately parallel to the user route, or is in the direction approximately opposite to the user's route. The direction of the camera is received along with its position coordinates. The PND is able to calculate the direction of the user route at the point where the camera is located. The angle between these two directions may be calculated in a number of ways, as will be obvious to one skilled in art. One way is to construct unit vectors for the two directions in the plane of the map. The angle between the two directions is then given by the inverse cosine of the mathematical vector dot product between the two unit vectors. If the angle is less than 90 degrees, the camera direction can be taken to be approximately parallel to the user's route. If the angle is greater than 90 degrees, the camera direction can be taken to be approximately opposite to the user's route. If the angle is exactly 90 degrees, the camera direction is unclear with respect to the user route, and may be represented by a query symbol. A greater level of sophistication could be used by displaying an arrow on the camera image and on the map which is at a continuously variable angle, the displayed angle being that obtained using an inverse trigonometric function and a vector mathematical calculation.

The PND can be configured to display a sequence of the images from successive cameras positioned along the route, when requested to do so by a user command. In this instance, an image from each relevant camera is displayed. The images are typically displayed in route order, and each is displayed for a short time or until the user manually selects to display the next camera image, or to cancel the sequence. The sequence may be interleaved with the aforementioned map display highlighting the symbol pertaining to the camera which produced the image it is about to display, as well as possibly an arrow showing the approximate direction in which the camera is pointing, and may include forward and back controls to allow the user to move flexibly to the images which are most interesting to them.

The PND may take advantage of the order of images required for a slide show to download the images from the network in expected display order, minimizing the delay to the user before all but the first image is displayed on screen. The expected first image of a slide show may be downloaded immediately a route has been selected, so that there is no delay at all before the slide show begins, when it is requested.

When audio or visual traffic information for a location is played back on the device, the device shows a menu option that enables the user to include or exclude that location from a route.

### Display of Camera Images in an Area

The user may choose to view camera image displays within an area that is of interest to them, either before selecting or requesting a route, or entirely independently of selecting a route. For instance if a driver commonly travels the same route, they may use the device to review the cameras on that route before or after setting off. Where this shows no problems, the driver might proceed on their way without asking the device to find a route. Only where the camera review shows congestion might the driver feel the need to request that the device select a route, to determine if their usual route is still the best. Where the camera images are related to an area, the device will display the road map of the selected geographical area, with camera symbols superimposed, as well as possibly arrows showing the approximate direction in which each camera is pointing. The user can select the camera, and the device will download and display the latest image from that camera.

The device can be requested to show a slide show of all the cameras in an area. An order of display can be selected by the device, for instance scanning the area and displaying the image from the camera closest to the user's current location first, and thereafter in distance sequence, with the furthest away last. This slide show can be chosen to be automatic i.e. to show each camera image for a few seconds, then move on to the next, or manual i.e. touch the screen, or issue some other command, to request the device to display the next image.

When the user of a device invokes it; the latest reports from television or radio stations which intersect the geographical area of interest to the user, or being routed over by the device, can be transmitted to the device and played back by it.

The device can be configured to use a mode of operation which will not distract the driver's attention from the safe operation of their vehicle. For instance, if rules are defined to cause the PND to automatically and repeatedly display appropriate images in sequence, the driver need not be interrupted by the PND, but need only view it when it is safe to do so. In this way, the device can provide guidance and interaction while the driver remains safe and behaves legally: in many jurisdictions the law requires or implies that the driver should not allow their attention to be distracted by an in-vehicle device such as a PND. An example in the UK is the 1988 Road Traffic Act. Of course, in the UK it is perfectly legal for a passenger to operate a PND interactively.

### Download and Compression

In current implementations of mobile communications networks, communications costs and delays can be significant when transmitting data of the size of images. In addition, different camera images may be made available in different sizes, scales and image formats. These problems can be mitigated by directing image requests through a proxy server which is attached to the fixed internet. In this arrangement, when the PND requires a camera image at a particular location, or a number of images in an area, it makes the request to the proxy server. The proxy server in turn requests the images from their various original locations, and receives them extremely quickly over the fixed internet. The proxy server may obtain data from the internet, or from audio or video broadcasts. Alternatively, the proxy server may receive data sent to it by external sources, such as on a periodic basis, such as every half hour, or when there is significant news to report. The proxy server then converts the images to a format which can be read by the PND, scales or clips the image to the PND form factor, and compresses the image to the minimum detail level visible on the PND screen, or to a level of detail which is less than the minimum detail level visible on the PND screen. Images may be supplied in black and white, as a black and white image requires less bandwidth than a colour image. An image processed in this way can usually be downloaded to a PND over GPRS in 1 or 2 seconds, thus enabling the image display mechanisms we have described.

### Traffic Camera Video Presentation

The system can support the download and display of video clips from the internet. The same systems of user interaction are employed to select video clips as are used to select still images: a video clip of traffic moving through the camera area is shown when the camera is selected via a camera symbol on a map, or a series of video clips are shown, one clip per camera, when a slide show of the cameras on a route or in an area is requested.

### Video Compression

In order to address the time and cost to download video clips over current communications networks (for example GPRS), a proxy server is used as an optional part of the system. The proxy server fetches original video clips over the fixed internet, and transforms them so that they are of the minimum size compatible with display on the PND. This reduces to acceptable levels the cost and time to download the clips. The proxy server clips frames of the video to the aspect ratio for the PND screen. The proxy server compresses individual frames so that they have no more detail than is visible on the PND screen, or to have less detail than is visible on the screen. This can result in a large reduction in the data size required. The proxy server may reduce the frame rate of the video to a minimum consistent with keeping the video viewable on the PND. This frame rate may be as low as 5 frames per second for a simple video such as that of vehicles moving past a static camera. The proxy server encodes the resultant video using a sophisticated A/V encoding standard such as MPEG-4 in order to yield highly compressed video data. Such encoding can factor out static background, and other common elements of successive images in a video clip, and only transmit the differences between one scene and the next. The constrained application of compressing traffic camera video clips is particularly amenable to such compression techniques, and can yield a video clip which encodes a few seconds of video at low frame rates in a size which is not orders of magnitude larger than the size of a still image.

### Radio Report Storage and Presentation

Local and national radio stations transmit periodic traffic reports. The proxy server can select traffic reports from the internet, or from broadcasts, using the RDS system. The proxy server can then store these reports as audio streams indexed by the station coverage area. When the user of a PND invokes them, the latest reports from stations which intersect the geographical area of interest to the driver, or from the route being used by the PND, can be transmitted to the PND and played back by it. The PND has a speaker which is used to issue verbal driving instructions. This speaker can be programmed to play back downloaded traffic reports when they are selected. The map interface used to select traffic cameras for image display may be augmented with symbols indicating audio traffic reports, including reports which refer to particular locations on the map. These can be selected for playback by touching the screen or by any of the other control mechanisms already described.

### Example of Implementation

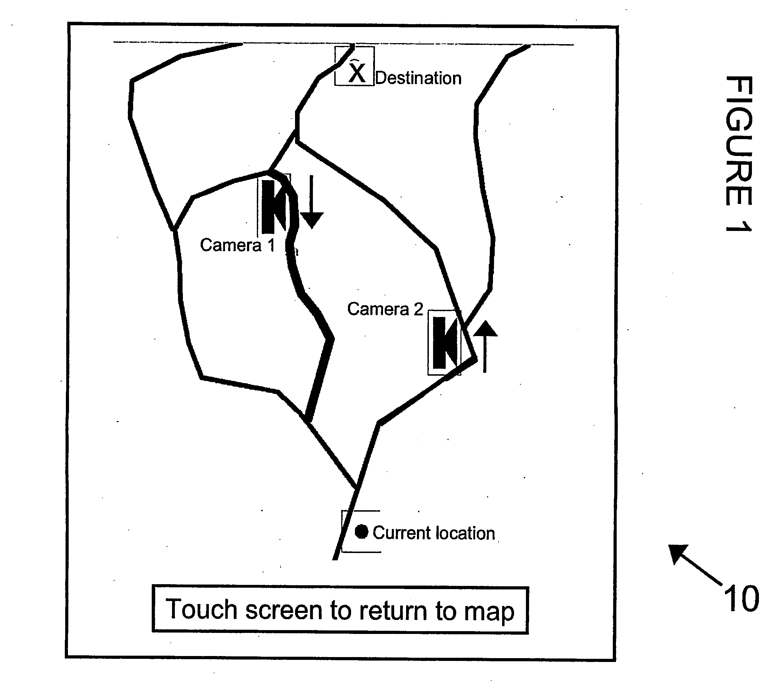

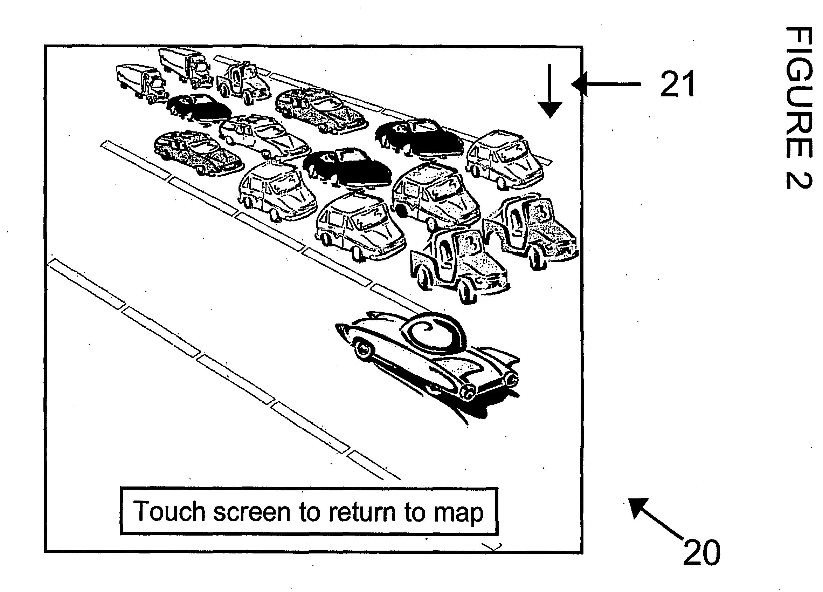

Here is an example of an implementation using the touch screen for a user to examine cameras on alternative possible routes. Figure 1 shows the map of the travel area displayed on the PND screen 10. Note that the position of the vehicle in which the PND is installed is indicated, as is the requested destination and the approximate locations of two static traffic cameras. The user touches the camera icon shown in the screen to select camera 1. The PND downloads the appropriate image from the proxy server. Figure 2 shows the image shown on the PND screen 20 from camera 1. By the direction of the arrow near to camera 1 in Figure 1, camera 1 is pointing in the opposite direction to the user's possible route past camera 1. This example is in the UK, where traffic drives on the left. Therefore because the image shows congestion on the side of the road on which the traffic is travelling in the opposite direction to the direction in which the camera is pointing, the user's possible route is suffering from congestion. This is in contrast to the traffic travelling in the direction in which the camera is pointing, which is not suffering from congestion. This example shows clearly the benefit of informing the user of the approximate direction in which the camera is pointing, as if the user did not know in which direction the camera was pointing, they would only have been able to infer that there was a 50:50 chance of encountering congestion near to camera 1. This is a very important benefit, as typically when congestion occurs, it occurs for traffic travelling in one direction and not for traffic travelling in the opposite direction. The arrow 21 in Figure 2 shows that the cameras taking the image is facing along the direction which is approximately opposite to that in which the user wishes to travel, because this is the meaning of an arrow which is pointing down. Another approach is for an arrow to be superimposed over the actual lanes that form part of the route; this may require pattern recognition software able to determine the edges of the road and to morph or alter the shape of an arrow so that it is shown in the correct orientation and perspective as though forming part of the road surface.

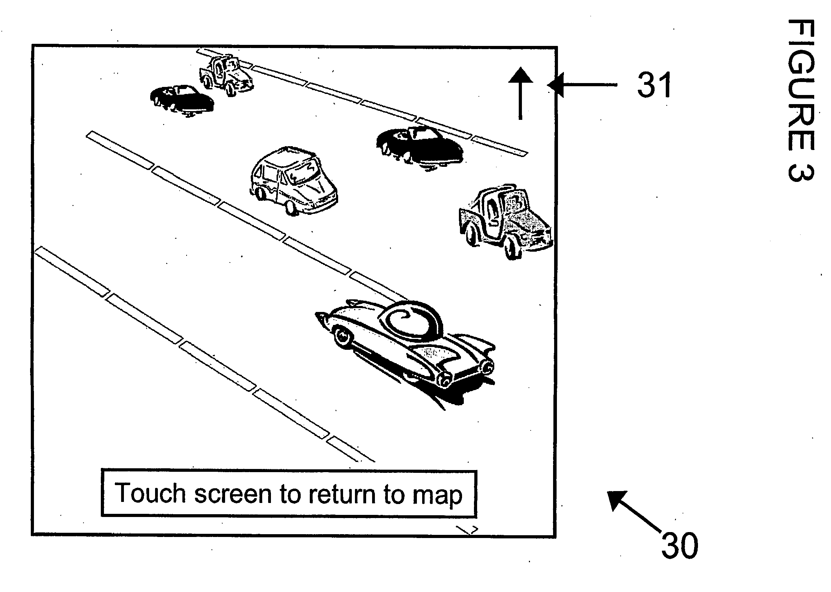

The driver returns to the map view of Figure 1 to investigate alternative route options. On viewing the image in Figure 1, the driver decides that the route passing camera 2 may be a good alternative. Figure 3 shows the image 30 displayed by the PND when the traffic camera 2 of Figure 1 is selected. The arrow 31 in Figure 3 shows that the camera taking the image is facing along the direction which is approximately parallel to that in which the user wishes to travel, because this is the meaning of an arrow which is pointing up. In Figure 3, because the direction in which the camera is pointing is approximately parallel to the intended journey direction, only one car is visible in the lanes for the direction in which the user wishes to travel. Based on the image in Figure 3, this route seems to be much less congested, so the driver decides to take the route past camera 2. At this point, the driver might ask the PND to calculate some routes. Amongst the routes offered by the PND, the optimum route offered by the PND would depend upon whether the routing system was aware of the delays at the camera 1 location, and what account it made of them in route selection. But it is clear that where there are cameras, the traffic camera images have given the driver a good idea of the correct route to take. The driver may select a route which passes by camera 2, such as by including the road by camera 2 as an intermediate point in the route. This can be facilitated by accompanying each traffic camera image (or, more generally, each playback of audio or video traffic information), with route calculation options, such as a button labelled 'include in route' and another button labelled 'exclude from route'. Touching the 'include in route' button then causes the route calculation algorithm (typically running on the PND itself) to calculate a route that goes past the traffic camera (or location otherwise referenced in the traffic information); touching the other button leads to a route being calculated that avoids that particular camera. The route calculation algorithm may well use other kinds of traffic data in performing its calculations (e.g. road traffic sensors, movement of mobile telephones across the cell network etc.); hence, a typical PND may display icons indicative of roadworks, or major accidents super-imposed over a navigation map or a schematic showing the planned route. It is well known that the quality of the traffic information can be very variable, not least because it comes from many different sources. Hence, it is not unknown for a major traffic jam to be completely unreported by many conventional traffic systems; with the present approach, a driver, seeing a traffic jam ahead, can ask his PND to display the POIs for all traffic cameras (this can be done using the standard POI selection process in which a user marks a check box for all POI types that are to be displayed). The PND then downloads the appropriate traffic camera data (which may be the most recent still image, or in some cases a real time video feed) and the driver can then select the traffic camera POI symbols for the cameras along say the next 5 miles of his route so that he has actual visual confirmation of what the traffic jam really looks like.

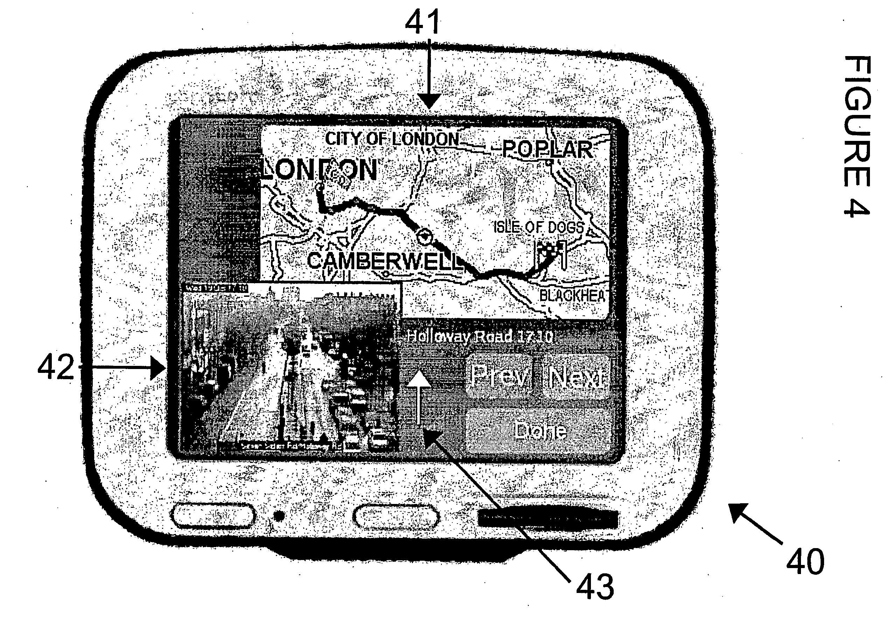

An image of a device 40 running an experimental system of the invention for traffic camera display 42 is shown in Figure 4. In Figure 4, the camera location is indicated on a map 41 together with an arrow which shows the approximate direction in which the camera is pointing. This is an example of how traffic camera images might look on a real-world PND. The white arrow 43 in Figure 4 shows that the camera taking the image is facing along the direction which is approximately parallel to that in which the user wishes to travel, because this is the meaning of an arrow which is pointing up.

The device described above allows a variety of A/V information sources on a communications network to be used to enhance the information provided by a personal navigation device. The mechanism for integrating the loading and viewing of traffic camera images with the route guidance and route selection facilities of a PND is a particular instance of this information enhancement. Other examples of A/V information enhancement have also been outlined. The application of image and video compression techniques and the use of a proxy server allow the data to be loaded onto the PND in real time and in an efficient manner. Although the use of PNDs has been emphasized above, it will be appreciated by those skilled in the art that the PND could instead be an embedded automotive navigation device.

Various modifications and alterations of this invention will become apparent to those skilled in the art without departing from the scope of this invention, and it should be understood that this invention is not to be unduly limited to the illustrative embodiments.

## Claims

1. A navigation device (40) operable to display on a screen (20) a route superimposed on a road map, together with one or more symbols each indicating a location for which audio or visual traffic information exists, each symbol being selectable to play back the audio or display the visual information
**Characterized in that**
The navigation device is operable to show a menu option that enables a user to include or exclude that location from a route if the audio or visual traffic information for that location is played back on the device.

2. The device of claim 1, wherein the traffic information is visual traffic information comprising still or video images.

3. The device of claim 1, wherein the traffic information is broadcast or otherwise distributed with location identifying data.

4. The device of claim 1, wherein the device includes a touch screen display and the symbols are each large enough to be reliably selected using a fingertip.

5. The device of Claim 1 that includes or is connected to a voice recognition engine, enabling a user to simply speak an appropriate control message to initiate playback of the audio or visual information.

6. The device of claim 1, wherein the device is operable to display at least one of the following symbols: an actual thumbnail image of a video frame from a traffic camera or an icon depicting a camera, being representative of visual traffic information, and a microphone being representative of audio information.

7. The device of claim 1, wherein the device is operable to display the latest image or sequence of images for the location associated with a symbol for a defined number of seconds when the user touches the screen in the vicinity of that symbol for visual traffic information.

8. The device of claim 1, wherein the device is operable to play back the latest audio report for a location associated with a symbol for audio traffic information when the user touches the screen in the vicinity of that symbol.

9. The device of claim 1, wherein the device is operable to display the latest image for a location associated with a symbol for visual traffic information when the user touches the screen in the vicinity of that symbol, such being displayed until the user manually chooses to return to the map by touching the screen or using some other control.

10. The device of claim 1, wherein the device is operable to play back the latest audio report for a location associated with a symbol for audio traffic information when the user touches the screen in the vicinity of that symbol, such play back being ended when the user manually chooses to return to the map by touching the screen or using some other control.

11. The device of claim 1, wherein the device can be configured to display a sequence of images along the route from a set of cameras along the route, when requested by a user command, either in a slide show format, or scrollable in a back-and-forth sequential manner through user interaction with appropriate visual buttons displayed on-screen.

12. The device of claim 11, wherein the device is operable to select the order of display of the camera images by scanning the area and displaying the camera images in the same sequence order as the sequence of camera distances from the user's current location, whereby the camera image from the camera nearest to the user's current location is displayed first, and the camera image from the camera furthest from the user's current location is displayed last.

13. A system comprising a device according to any of the preceding claims, and a proxy server operable to supply audio or visual traffic information to said device, the navigation device itself being operable to display on a screen a route superimposed on a road map together with one or more symbols each indicating a location for which audio or visual traffic information exists on said server which adapts the audio or visual information for the specific playback requirements of said device.

14. A system according to claim 13, wherein the proxy server is supplied with data from audio or visual traffic information sources.

15. A system according to claim 13 wherein the proxy server operates as middleware that takes in data feeds for audio and visual traffic information and adapts that information to conform to a standard, or extracts data from that incoming information and re-packages that data in a standard format suitable for bandwidth efficient broadcast or transmission to navigation devices.

16. A system according to claim 13 wherein the proxy server requests data from audio or visual traffic information sources.

17. A system according to claim 13 wherein the proxy server does one or more of the following:
- converts an image to a format that can be read by a navigation device,
- scales or clips an image to a navigation device form factor.
- compresses an image to the minimum detail level visible on a navigation device screen
- reduces the frame rate of the video to a minimum consistent with keeping the video viewable on a navigation device
- encodes a resultant video using an A/V encoding standard such as MPEG-4 in order to yield highly compressed video data
- select traffic reports from the internet, or from broadcasts
- store the traffic reports as audio streams indexed by the station coverage area

18. A system according to claim 17 wherein when a user of a navigation device makes a request, the latest reports from stations which intersect the geographical area of interest to the driver, or from stations in the geographical area through which the driver is being routed by the device, can be transmitted to the device and played back by it.

19. A method of providing audio or visual traffic information to a navigation device, the navigation device being operable to display on a screen a route superimposed on a road map, together with one or more symbols each indicating a location for which audio or visual traffic information exists, each symbol being selectable to play back the audio or visual information, **characterized in that**
if the audio or visual traffic information for a location is played back on the device, the device shows a menu option that enables a user to include or exclude that location from a route, said method comprising the steps of:
(a) a proxy server obtaining or being provided with audio or visual traffic information from one or more sources of that information;
(b) the proxy server manipulating the information for reproduction on the device.

## Patentansprüche

1. Navigationsgerät (40) zum Anzeigen einer auf eine Straßenkarte überlagerten Route auf einem Bildschirm (20) zusammen mit einem oder mehreren Symbolen, die jeweils einen Ort anzeigen, für den es akustische oder visuelle Verkehrsinformationen gibt, wobei jedes Symbol so gewählt werden kann, dass es die akustischen Informationen wiedergeben oder die visuellen Informationen anzeigen kann, **dadurch gekennzeichnet, dass**
das Navigationsgerät so ausgelegt ist, dass es eine Menüoption zeigt, die es einem Benutzer emöglicht, den Ort in eine Route einzubeziehen oder ihn davon auszuschließen, wenn die akustischen oder visuellen Verkehrsinformationen für diesen Ort auf dem Gerät wiedergegeben werden.

2. Gerät nach Anspruch 1, wobei die Verkehrsinformationen visuelle Verkehrsinformationen sind, die Fest- oder Bewegtbilder umfassen.

3. Gerät nach Anspruch 1, wobei die Verkehrsinformationen rundgesendet oder auf andere Weise mit Ortsidentifizierungsdaten verteilt werden.

4. Gerät nach Anspruch 1, wobei das Gerät ein Touchscreen-Display beinhaltet und die Symbole groß genug sind, damit sie mit der Fingerspitze zuverlässig ausgewählt werden können.

5. Gerät nach Anspruch 1, das eine Spracherkennungsmaschine beinhaltet oder mit einer solchen verbunden ist, die es einem Benutzer ermöglicht, einfach eine geeignete Steuermeldung auszusprechen, um die Wiedergabe der akustischen oder visuellen Informationen einzuleiten.

6. Gerät nach Anspruch 1, wobei das Gerät so ausgelegt ist, dass es wenigstens eines der folgenden Symbole anzeigt: eine tatsächliche Miniaturansicht eines Video-Frames von einer Verkehrskamera oder ein Icon, das eine Kamera darstellt, repräsentativ für visuelle Verkehrsinformationen, und ein Mikrofon, das für akustische Informationen repräsentativ ist.

7. Gerät nach Anspruch 1, wobei das Gerät so ausgelegt ist, dass es das neueste Bild oder die neueste Bildfolge für den mit einem Symbol assoziierten Ort für eine definierte Anzahl von Sekunden anzeigt, wenn der Benutzer den Bildschirm in der Nähe dieses Symbols für visuelle Verkehrsinformationen berührt.

8. Gerät nach Anspruch 1, wobei das Gerät so ausgelegt ist, dass es den neuesten Audiobericht für einen mit einem Symbol assoziierten Ort für akustische Verkehrsinformationen wiedergibt, wenn der Benutzer den Bildschirm in der Nähe dieses Symbols berührt.

9. Gerät nach Anspruch 1, wobei das Gerät so ausgelegt ist, dass es das neueste Bild für einen mit einem Symbol für visuelle Verkehrsinformationen assoziierten Ort anzeigt, wenn der Benutzer den Bildschirm in der Nähe dieses Symbols berührt, wobei dieses so lange angezeigt wird, bis der Benutzer durch Berühren des Bildschirms oder über ein anderes Bedienelement manuell wählt, zur Karte zurückzukehren.

10. Gerät nach Anspruch 1, wobei das Gerät so ausgelegt ist, dass es den neuesten Audiobericht für einen mit einem Symbol für akustische Verkehrsinformationen assoziierten Ort wiedergibt, wenn der Benutzer den Bildschirm in der Nähe dieses Symbols berührt, wobei eine solche Wiedergabe beendet wird, wenn der Benutzer durch Berühren des Bildschirms oder über ein anderes Bedienelement manuell wählt, zur Karte zurückzukehren.

11. Gerät nach Anspruch 1, wobei das Gerät so konfiguriert werden kann, dass es nach Aufforderung durch einen Benutzerbefehl eine Folge von Bildern entlang der Route von einem Satz Kameras entlang der Route entweder in einem Diashow-Format oder sequentiell vor und zurück rollend durch Benutzerinteraktion mit geeigneten auf dem Bildschirm angezeigten visuellen Schaltflächen anzeigt.

12. Gerät nach Anspruch 11, wobei das Gerät die Aufgabe hat, die Reihenfolge der Anzeige der Kamerabilder durch Scannen des Bereichs und Anzeigen der Kamerabilder in derselben Reihenfolge wie die der Kameraabstände vom aktuellen Ort des Benutzers auszuwählen, so dass das Kamerabild von der dem aktuellen Ort des Benutzers am nächsten liegenden Kamera zuerst und das Kamerabild von der vom aktuellen Ort des Benutzers am weitesten entfernten Kamera zuletzt angezeigt wird.

13. System, das ein Gerät nach einem der vorherigen Ansprüche und einen Proxy-Server mit der Aufgabe umfasst, akustische oder visuelle Verkehrsinformationen zu dem genannten Gerät zu liefern, wobei das Navigationsgerät selbst so ausgelegt ist, dass es auf einem Bildschirm eine auf eine Straßenkarte überlagerte Route zusammen mit einem oder mehreren Symbolen anzeigt, die jeweils einen Ort anzeigen, für den akustische oder visuelle Verkehrsinformationen auf dem genannten Server vorliegen, der die akustischen oder visuellen Informationen für die jeweiligen Wiedergabeerfordernisse des genannten Gerätes adaptiert.

14. System nach Anspruch 13, wobei der Proxy-Server mit Daten von akustischen oder visuellen Verkehrsinformationsquellen beliefert wird.

15. System nach Anspruch 13, wobei der Proxy-Server als Middleware arbeitet, die Dateneinspeisungen für akustische und visuelle Verkehrsinformationen empfängt und diese Informationen so adaptiert, dass sie einem Standard entsprechen, oder Daten aus diesen eingehenden Informationen extrahiert und diese Daten in einem Standardformat neu verpackt, das für eine Bandbreiten-effiziente Rundsendung oder Übertragung zu Navigationsgeräten geeignet ist.

16. System nach Anspruch 13, wobei der Proxy-Server Daten von akustischen oder visuellen Verkehrsinformationsquellen anfordert.

17. System nach Anspruch 13, wobei der Proxy-Server eine oder mehrere der folgenden Tätigkeiten ausführt:
- Konvertieren eines Bildes in ein Format, das von einem Navigationsgerät gelesen werden kann,
- Skalieren oder Clippen eines Bildes in einen Navigationsgerät-Formfaktor,
- Komprimieren eines Bildes auf die Mindestdetailebene, die auf einem Navigationsgerätebildschirm sichtbar ist,
- Reduzieren der Frame-Rate des Videos auf ein Minimum, bei dem das Video auf einem Navigationsgerät sichtbar bleibt,
- Codieren eines resultierenden Videos mit einem A/V-Codierstandard wie MPEG-4, um hoch komprimierte Videodaten zu erzeugen,
- Auswählen von Verkehrsberichten aus dem Internet oder unter Broadcasts,
- Speichern der Verkehrsberichte als Audio-Streams, die vom Abdeckungsbereich der Station indexiert werden.

18. System nach Anspruch 17, wobei, wenn ein Benutzer eines Navigationsgeräts eine Anforderung macht, die neuesten Berichte von Stationen, die den geografischen Bereich von Interesse für den Fahrer überlappen, oder von Stationen in dem geografischen Bereich, durch den der Fahrer von dem Gerät geleitet wird, zu dem Gerät gesendet und davon wiedergegeben werden können.

19. Verfahren zum Liefern von akustischen oder visuellen Verkehrsinformationen zu einem Navigationsgerät, wobei das Navigationsgerät so ausgelegt ist, dass es eine auf eine Straßenkarte überlagerte Route auf einem Bildschirm zusammen mit einem oder mehreren Symbolen anzeigt, die jeweils einen Ort anzeigen, für den akustische oder visuelle Verkehrsinformationen vorliegen, wobei jedes Symbol gewählt werden kann, so dass die akustischen oder visuellen Informationen wiedergegeben werden können, **dadurch gekennzeichnet, dass**
wenn die akustischen oder visuellen Verkehrsinformationen für einen Ort auf dem Gerät wiedergegeben werden, das Gerät eine Menüoption zeigt, die es einem Benutzer ermöglicht, diesen Ort in eine Route einzubeziehen oder ihn davon auszuschließen, wobei das genannte Verfahren die folgenden Schritte beinhaltet:
(a) Einholen von oder Beliefertwerden mit akustischen oder visuellen Verkehrsinformationen von einer oder mehreren Quellen dieser Informationen durch einen Proxy-Server;
(b) Manipulieren der Informationen zur Wiedergabe auf dem Gerät durch den Proxy-Server.

## Revendications

1. Dispositif de navigation (40) apte à fonctionner pour présenter sur un affichage (20) un itinéraire superposé à une carte routière, en conjonction avec un ou plusieurs symboles, chacun indiquant un emplacement pour lequel il existe des informations de trafic audio ou visuelles, chaque symbole étant sélectionnable de manière à reproduire les informations audio ou à afficher les informations visuelles,
**caractérisé en ce que**
le dispositif de navigation est apte à fonctionner pour présenter une option de menu qui permet à un utilisateur d'inclure ou d'exclure un emplacement précis d'un itinéraire si les informations de trafic audio ou visuelles pour cet emplacement sont reproduites sur le dispositif.

2. Dispositif selon la revendication 1, les informations de trafic étant des informations de trafic visuelles englobant des images fixes ou vidéo.

3. Dispositif selon la revendication 1, les informations de trafic étant diffusées ou distribuées par d'autres moyens en conjonction avec des données d'identification d'emplacement.

4. Dispositif selon la revendication 1, le dispositif comportant un affichage à écran tactile et chacun des symboles étant suffisamment grand pour en permettre une sélection fiable du bout des doigts.

5. Dispositif selon la revendication 1 qui englobe un moteur de reconnaissance de la voix, ou qui y est connecté, permettant ainsi à un utilisateur de simplement prononcer un message de commande approprié pour amorcer la reproduction des informations audio ou visuelles.

6. Dispositif selon la revendication 1, le dispositif étant apte à fonctionner pour afficher au moins l'un des symboles suivants : une imagette réelle d'une trame vidéo provenant d'une caméra de circulation routière ou une icône illustrant une caméra, qui est représentative des informations de trafic visuelles, et un microphone qui est représentatif des informations audio.

7. Dispositif selon la revendication 1, le dispositif étant apte à fonctionner pour afficher la dernière image ou séquence d'images pour l'emplacement associé à un symbole pendant un nombre défini de secondes lorsque l'utilisateur touche l'écran à proximité de ce symbole pour des informations de trafic visuelles.

8. Dispositif selon la revendication 1, le dispositif étant apte à fonctionner pour reproduire le dernier bulletin audio pour un emplacement associé à un symbole pour des informations de trafic audio lorsque l'utilisateur touche l'écran à proximité de ce symbole.

9. Dispositif selon la revendication 1, le dispositif étant apte à fonctionner pour afficher la dernière image pour un emplacement associé à un symbole pour des informations de trafic visuelles, lorsque l'utilisateur touche l'écran à proximité de ce symbole, celui-ci étant affiché jusqu'au moment où l'utilisateur choisit manuellement de revenir à la carte, en touchant l'écran ou en utilisant une autre commande quelconque.

10. Dispositif selon la revendication 1, le dispositif étant apte à fonctionner pour reproduire le dernier bulletin audio pour un emplacement associé à un symbole pour des informations de trafic audio lorsque l'utilisateur touche l'écran à proximité de ce symbole, une telle reproduction se terminant au moment où l'utilisateur choisit manuellement de revenir à la carte, en touchant l'écran ou en utilisant une autre commande quelconque.

11. Dispositif selon la revendication 1, le dispositif pouvant être configuré pour afficher une séquence d'images le long de l'itinéraire à partir d'un ensemble de caméras situées le long de l'itinéraire, lorsque cela est demandé par une commande Utilisateur, soit sous un format de diaporama, soit sous forme déroulable de manière séquentielle en sens Avant/Arrière grâce à une interaction de l'utilisateur à l'aide des boutons visuels appropriés affichés sur écran.

12. Dispositif selon la revendication 11, le dispositif étant apte à fonctionner pour sélectionner l'ordre d'affichage des images de caméra suite au scannage de la zone et à la présentation des images de caméra suivant le même ordre séquentiel que la séquence des distances de caméra à partir de l'emplacement actuel de l'utilisateur, cas dans lequel l'image de caméra provenant de la caméra la plus proche de l'emplacement actuel de l'utilisateur est affichée en premier, alors que l'image de caméra provenant de la caméra la plus éloignée de l'emplacement actuel de l'utilisateur est affichée en dernier.

13. Système comprenant un dispositif selon l'une quelconque des revendications précédentes, et un serveur proxy apte à fonctionner pour fournir audit dispositif des informations de trafic audio ou visuelles, le dispositif de navigation proprement dit étant apte à fonctionner pour présenter sur un affichage un itinéraire superposé à une carte routière, en conjonction avec un ou plusieurs symboles, chacun indiquant un emplacement pour lequel il existe des informations de trafic audio ou visuelles sur ledit serveur, ce dernier adaptant les informations audio ou visuelles aux exigences de reproduction spécifiques dudit dispositif.

14. Système selon la revendication 13, le serveur proxy étant alimenté en données provenant de sources d'information de trafic audio ou visuelles.

15. Système selon la revendication 13, le serveur proxy opérant en tant que logiciel médiateur qui accepte des arrivées de données pour des informations de trafic audio et visuelles, et adapte ces informations pour les rendre conformes à une norme, ou extrait des données à partir de ces informations arrivantes et reconditionne ces données en un format normalisé lequel convient à une diffusion avec usage efficace de la bande passante ou une transmission vers des dispositifs de navigation.

16. Système selon la revendication 13, le serveur proxy demandant des données auprès de sources d'information de trafic audio ou visuelles.

17. Système selon la revendication 13, le serveur proxy exécutant l'une ou plusieurs des opérations suivantes consistant à :
- convertir une image en un format qui peut être lu par un dispositif de navigation,
- mettre à l'échelle ou rogner une image jusqu'à un facteur de forme du dispositif de navigation,
- comprimer une image jusqu'au niveau du détail minimum visible sur un écran de dispositif de navigation,
- réduire la vitesse de trame de la vidéo jusqu'à une valeur minimum qui soit cohérente avec l'aptitude à visionner la vidéo sur un dispositif de navigation,
- coder une vidéo résultante en utilisant une norme de codage audio-visuelle, par exemple MPEG-4, afin d'obtenir des données vidéo à compression élevée,
- sélectionner des bulletins de trafic à partir de l'internet ou de radiodiffusions,
- stocker les bulletins de trafic sous la forme de flux audio indexés par la zone de couverture de la station.

18. Système selon la revendication 17, lorsqu'un utilisateur d'un dispositif de navigation fait une demande, les derniers bulletins provenant des stations qui entrecoupent la zone géographique présentant un intérêt pour le conducteur, ou provenant des stations se trouvant dans la zone géographique à travers laquelle le conducteur est guidé suivant l'itinéraire du dispositif, peuvent être transmis au dispositif et peuvent être reproduits par ce dernier.

19. Procédé permettant de fournir des informations de trafic audio ou visuelles à un dispositif de navigation, le dispositif de navigation étant apte à fonctionner pour présenter sur un affichage un itinéraire superposé à une carte routière, en conjonction avec un ou plusieurs symboles, chacun indiquant un emplacement pour lequel il existe des informations de trafic audio ou visuelles, chaque symbole étant sélectionnable de manière à reproduire les informations audio ou les informations visuelles, **caractérisé en ce que**
si les informations de trafic audio ou visuelles pour un emplacement sont reproduites sur le dispositif, le dispositif présente une option de menu qui permet à un utilisateur d'inclure ou d'exclure cet emplacement précis d'un itinéraire, ledit procédé comprenant les étapes suivantes :
(a) un serveur proxy qui obtient ou qui reçoit des informations de trafic audio ou visuelles à partir d'une ou de plusieurs sources de ces informations ;
(b) le serveur proxy qui manipule les informations à des fins de reproduction sur le dispositif.
